(19) Europäisches Patentamt
European Patent Office
Office européen des brevets

(11) EP 0 605 048 B1

(12) **EUROPEAN PATENT SPECIFICATION**

(45) Date of publication and mention
of the grant of the patent:
**17.03.1999 Bulletin 1999/11**

(51) Int Cl.⁶: **G06K 15/02**

(21) Application number: **93203643.7**

(22) Date of filing: **23.12.1993**

(54) **Method of modifying the fatness of characters**

Methode zur Modifizierung des Fettdruckes von Buchstaben

Méthode pour modifier l'aspect gras de caractères

(84) Designated Contracting States:
**DE FR GB IT NL**

(30) Priority: **28.12.1992 EP 92204086**

(43) Date of publication of application:
**06.07.1994 Bulletin 1994/27**

(73) Proprietor: **Océ-Technologies B.V.**
**5914 CC Venlo (NL)**

(72) Inventors:
• **Koopman, Stephan Bernardus Jozef**
**NL-5953 CL Reuver (NL)**
• **Abbekerk, Abraham Nico**
**NL-5925 BM Venlo (NL)**

(74) Representative: **Hanneman, Henri W., Dr. et al**
**Océ-Technologies B.V.**
**Patents & Information**
**St. Urbanusweg 43**
**P.O. Box 101**
**5900 MA Venlo (NL)**

(56) References cited:
**EP-A- 0 385 269        EP-A- 0 447 126**

• **PATENT ABSTRACTS OF JAPAN vol. 16, no. 323 (P-1386) 15 July 1992 & JP-A-04 093 992 (FUJI XEROX CO LTD) 26 March 1992**
• **PATENT ABSTRACTS OF JAPAN vol. 16, no. 323 (P-1386) 15 July 1992 & JP-A-04 093 994 (FUJI XEROX CO LTD) 26 March 1992**
• **PATENT ABSTRACTS OF JAPAN vol. 16, no. 565 (P-1457) 07 December 1992 & JP-A-04 218 094 (FUJI XEROX CO LTD) 07 August 1992**
• **PATENT ABSTRACTS OF JAPAN vol. 16, no. 378 (P-1402) 13 August 1992 & JP-A-04 120 594 (BROTHER IND LTD) 21 April 1992**

**Description**

The invention relates to a method of modifying the fatness of characters to be output on a raster output device, said method comprising

- saving font data which define the shape of each character as an outline consisting of line segments, including curved line segments defined by a set of parameters including among others a starting point P0 and an end point P3 of the line segment and the tangent directions of the line segments at P0 and P3,
- defining a fattening distance f by which the fatness of the character after the modifying is to differ from that of the original font character
- calculating a modified outline on the basis of said font data and said fattening distance f, by

    a) shifting at least the points P0 and P3 by said fattening distance f in a direction normal to the respective tangent directions at said points, thereby obtaining the starting point P0' and the end point P3' of a curved segment of the modified outline, and

- obtaining a bitmap representation of the character by filling the modified outline with discrete pixels.

The invention also relates to a printer suitable for executing this method.

When text information is to be printed or displayed on a raster output device, for example a laser printer or a CRT tube, a bitmap representation of each character of the text is needed, which indicates for each pixel whether it belongs to the filled portion of the character or to the background. When a plurality of fonts is to be used, a large number of different bitmap representations may be needed for each character, because the bitmap representation is dependent on the font, the font size and on the pixel size with which the printer operates. In order to reduce the required amount of storage capacity and to improve the portability of the fonts among different output devices, it is convenient to define the shapes of the character of a font by giving mathematic descriptions of the outlines of the characters. The outline consists of one or more non intersecting closed paths which represent the borders of the filled parts of the characters. Each path is an oriented curve which is passed through in a specific direction and, by convention, the filled (black) part of the character is found on the left side of the curve when passed through in this direction. The mathematical description of each path may consist of coordinates of the end points of straight line segments and of support points of Bezier curves, as is disclosed in DE A 38 11 396 and EP A 0 393 680.

The bitmap representation can be derived from the outline by overlaying the pixel raster onto the outline and filling the area enclosed in the outline with black pixels. (In this context, "black" means the colour in which the characters are to be printed.)

Since the outlines can easily be scaled, only a single outline description is needed for each font character, and different font sizes can be obtained by scaling the outline. Thus, only little storage capacity is needed for storing the fonts in the printer. When a given piece of text is to be printed, bitmap representations need to be generated only for those fonts and font sizes which actually appear in the text. On the other hand, it is of course possible to generate and store bitmap representations of those fonts which are used most frequently.

Since the outline representation is independent of the properties of the printer, the printable characters of a given font have a similar appearance, irrespective of the output device used for printing. Nevertheless, the properties of the printer may often have some effect on the appearance of the text, so that it is necessary or at least desirable to compensate these effects.

For example, laser printers may be divided into two major groups which are called "black writer" and "white writer", respectively. In a black writer, only those portions of the printed image are developed with black toner which have been exposed by the laser beam. In white writers, only those portions are developed which have not been exposed by the laser beam. In any case, the exposure spot created by the laser beam does not have an ideal square shape of the size of one pixel, but it has rather an approximately circular shape. As a consequence, the size of the exposure spot must be slightly larger than one pixel, in order to provide a certain overlap for producing continuous white areas in a white writer and continuous black areas in a black writer, respectively. Due to this over size of the exposure spot, black characters printed with a white writer appear more faint than black characters printed on a black writer. To compensate for this effect, the characters, more specifically the bitmap representations thereof, should be made fatter in a white writer.

To this end, the bitmap representations may be hand optimized by adding more black pixels at specific locations. However, this procedure would have to be carried out individually for each font, font size and type of printer engine and would therefore be very time consuming and costly and would cancel most of the advantages achieved by using outline descriptions. Accordingly, there is a need for efficient fattening methods which can be performed automatically.

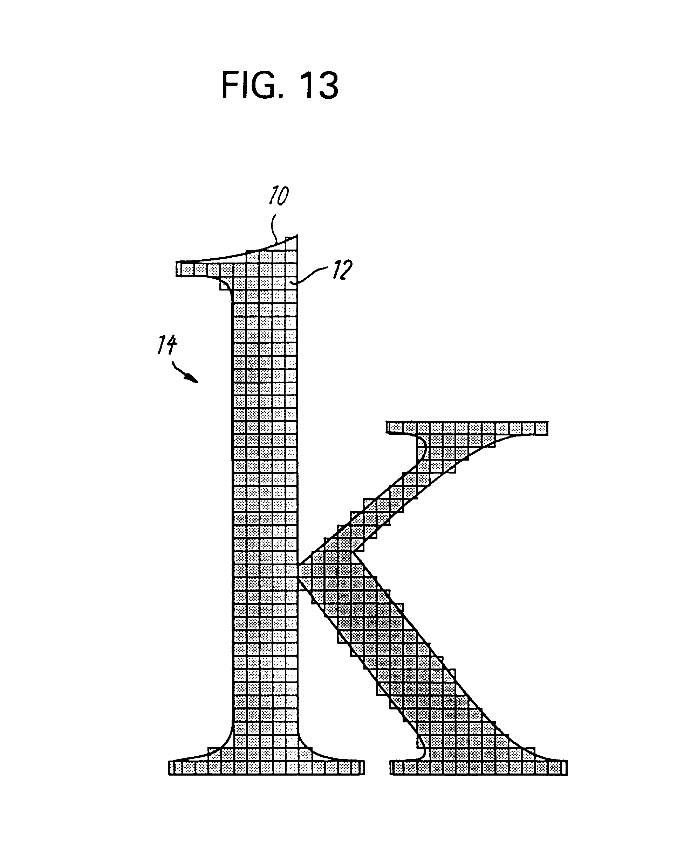

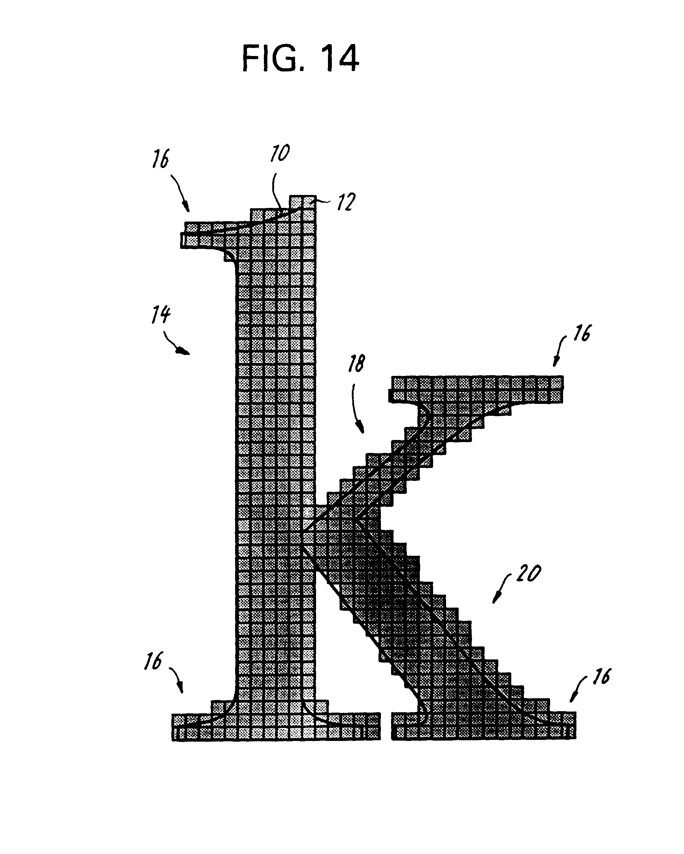

One approach of automatic fattening will be described below in conjunction with Fig. 13 and 14.

Fig. 13 shows the outline 10 of a character "k", as well as its bitmap representation overlayed on the outline. The black pixels of the bitmap are represented by gray squares 12. In order to fatten this character, the bitmap is first shifted by one pixel towards the right and the shifted bitmap is combined with the original one by logic OR. Then, the resulting bitmap is shifted by one pixel towards the top and this shifted bitmap is combined with the bitmap resulting from the first shift operation by logic OR. The result is shown in Fig. 14. It is noted that the vertical stem 14 of the character has been fattened by adding one pixel on the right edge. This is equivalent to the result which would have been obtained by shifting both the left and right borders of the stem 14 outward by 1/2 pixel. Since the fattening distance f is defined as the distance by which the borders of the filled part of the character are shifted outward, the fattening operation illustrated in Fig. 13 and 14 corresponds to a fattening distance of 1/2 pixel. Similarly, the substantially horizontal borderlines at the top edges of the serifs 16 have been shifted upward by one pixel, which is equivalent to shifting the upper borders upwards by one half pixel and shifting the lower borders downwards by one half pixel. Thus, horizontal portions or stems of the character are also fattened with f = 1/2 pixel. However, it will be noted that in Fig. 14 the upwards inclined stem 18 and the downwards inclined stem 20 of the character have been fattened too much. Thus, the fattening achieved by this process is not uniform, and the appearance of the character is degraded.

Another drawback of this approach is that no smaller fattening distances than f = 1/2 pixel can be obtained. In many cases, this fattening distance is too large for compensating the over size of the exposure spot in white writers. It should be noted that fattening distances of less than 1/2 pixel are significant even though the spacial resolution of the printer is limited to one pixel. Due to this limited resolution, the width of vertical and horizontal lines or stems in the printed image can only be varied in steps of one pixel. However, the effective width of inclined lines or stems can be varied in steps which are considerably smaller than one pixel, and the appearance and readability of the printed text could be remarkably improved if it were possible to fatten such inclined portions of characters with an appropriate fattening distance.

US A 4 625 222 discloses another approach for automatic fattening of character bitmaps in a printing machine. According to this approach, gray pixels are added to the bitmap at specific locations at the border between black and white areas, so that the characters appear somewhat unsharp. The visual effect achieved by this measure is similar to a fattening with a fattening distance of less than 1/2 pixel. However, this approach is limited to printers which are capable of reproducing gray levels, and the improvements achieved in readability of the printed text are limited, because the human visual perception depends particularly on sharp contrasts between black and white areas, and the addition of gray pixels to the character means a loss of contrast.

US A 4 620 287 relates to the field of computer generated graphic arts and is concerned with the problem of changing the line weight of curved lines. This problem has some analogy with the problem of fattening characters. According to the approach disclosed in this document, a curved line is approximated by a sequence of straight line segments, and in order to obtain larger line weights, these line segments are replaced by elongated rectangles with a width corresponding to the desired line width. With this method it is possible to achieve a uniform fattening with arbitrarily small fattening distances, but in order to preserve a smooth appearance of curved lines, the curve must be divided into a large number of segments and rectangles, respectively, so that the calculations and graphic operations to be performed by the computer become very time consuming.

In another known method, an outline is similarly divided into a sequence of straight line segments. Then a small geometrical body, such as a square or rectangle, is placed at each meeting point of two adjacent segments, and then each line segment is shifted outward to a position in which it connects corresponding outward corners of the two geometrical bodies at the ends of the line segment. Depending on the angle between the two adjacent line segments, the shifted segments may intersect, meet or not meet at all. In the latter case, the new outline is completed by one or more outward facing sides of the geometrical body situated at the connection point of the two original line segments. In that case the sides to be used can be determined from an analysis of the angle between the segments. In the case that the shifted segments intersect, the ends may be cut off, or the new outline may be completed in much the same way as for non meeting segments, creating a loop behind the new outline, which at its turn is ignored during the filling with black pixels, e.g. by using the so called non zero winding number rule. The result is the same as that of a convolution of the body bordered by the original outline and the mentioned geometrical body. In this method the fattening distance depends upon the local direction of the outline and so is not uniform, which can be inconvenient.

In still another approach for automatic fattening of outline characters, the fattening process is performed on the outline before the same is transformed into a bitmap representation. More precisely, first a modified outline is calculated by shifting the original outline outward, and then a bitmap corresponding to the fattened character is produced by rasterizing the modified outline. Whereas the previously discussed methods of fattening characters are performed at the bitmap level, in this approach the fattening is performed with the outline before it is transformed into the bitmap representation.

Such a method is known from JP-A 40 093 992, which is described in the preamble of claim 1. This known method is used for curved line segments defined by control points on the curve itself, so-called B-spline curves. According to this known method, each control point is shifted in a direction normal to the local tangent direction of the segment, by the fattening distance. Then, a new outline segment is calculated through the shifted control points.

The general approach of first shifting the outline outward and then rasterizing the shifted outline in order to produce a fattened character, is also disclosed in JP-A 42 018 094 and JP-A 41 020 594. The former of these discloses treatment of outlines consisting of straight sections only, thus does not disclose a method of shifting curved line segments. The latter, although shifting curved line segments as well, does not disclose the way in which this is accomplished.

It is an object of the present invention to provide a new method by which the fatness of characters can be finely and efficiently adjusted by an arbitrary amount and a printer wherein said method is implemented. According to the invention, this object is achieved by providing a method according to the preamble of claim 1, which is characterized by said step of calculating a modified outline further comprising:

b) setting the tangent direction of the modified line segment at P0' to be parallel with the tangent direction of the original line segment at P0 and the tangent direction of the modified line segment at P3' to be parallel with the tangent direction of the original line segment at P3, and

c) varying at least one other parameter determining the shape of the modified line segment, using the tangent direction of the modified line segment at P0' and P3', such that the distance between the original line segment and the modified line segment becomes approximately equal to f over the whole length of the line segments.

A printer for carrying out this method is claimed in claim 9.

The present invention is particularly suited for operating on curved line segments of the third order Bezier curve type. Generally, third order Bezier curves are defined by four control points, i.e. a starting point (P0), an end point (P3) and two intermediate points (P1 and P2). The intermediate points are situated outside the line segment, on the tangent lines at the starting point and the end point, respectively, and define the curvature of the line segment by their distance from the starting point and the end point, respectively. According to an aspect of the present invention, said other parameters which are varied in step c) are the positions of the control points P1 and P2 on the tangent lines at P0 and P3, respectively. In this way, the control points P1 and P2 are moved, with the tangent lines they are situated on, in the respective normal directions, and also, in a direction parallel to the tangent line they are situated on.

The applicability of the invention is not limited to the correction of specific features of the raster output devices. The inventors have found that the legibility of a printed text is greatly influenced by the setting of the fatness of the characters, in particular in case of small font sizes, but that there are great differences in the fatness which is regarded as optimum by different individuals. The invention now offers the possibility to individually adjust the fatness in accordance with the preferences of the user. Accordingly, a text reproduction system, e.g. a printer, according to the invention may be equipped with a selector switch fo adjusting the fatness of the characters to be printed. As an alternative, the fatness may also be set in a host computer from which the text is transmitted to the printer. In this case, if the printer is shared by a plurality of users in a network, each user may set the fatness individually of legibility but may also be useful for improving optical character recognition (OCR).

The invention further offers the possibility of non linear scaling, which means that the fatness is increased disproportionately for small font sizes, in order to improve the legibility. This has been common practice in the art of printing with metal types, but has heretofore been difficult to implement in digital printing machines.

Another useful application is the correction of discretization errors. Such errors result from the fact that, in the bitmap consisting of discrete pixels, the line width of diagonal lines or stems can be reproduced with much higher accuracy than the line width of vertical and horizontal lines or stems. For example, if the vertical and diagonal stems of, for example, the character "N" are required to have a width of 3.8 pixels according to the selected font and font size, the width of the vertical stems will be rounded to 4 pixels in the discretization process. However, the average width of the diagonal stem will still be approximately 3.8 pixels, even after discretization. Thus, the discretization produces an undesirable imbalance in stem widths. According to the invention, this imbalance can be avoided by selecting a fattening distance of f = 0.1 pixel. Then, the width of both the vertical and diagonal stems will uniformly amount to 4.0 pixel before and after discretization.

More specific optional features of the invention are indicated in the dependent claims.

The invention will now be described in detail in conjunction with the accompanying drawings in which:

Fig. 1 is a perspective view of a laser printer embodying the invention,
Fig. 2 is a block diagram of the laser printer,
Fig. 3 is a flow chart illustrating the general steps of a fattening method according to the invention,
Fig. 4 shows an outline and a bitmap representation of the character "k" fattened in accordance with the invention,
Figs. 5A, 5B illustrate the process of fattening a character which is bounded by straight line segments,

Fig. 6 illustrates a special case where straight line segments of an outline meet at an acute angle,

Figs. 7, 8 illustrate a method of fattening outline segments which are defined as Bezier curves,

Figs. 9 to 12 illustrate a method of approximately determining an intersection point between curved line segments,

Fig. 13 illustrates an outline and a bitmap representation of a character "k", and

Fig. 14 illustrates a bitmap representation of the character shown in Fig. 13, but fattened according to a method which is not subject of the invention.

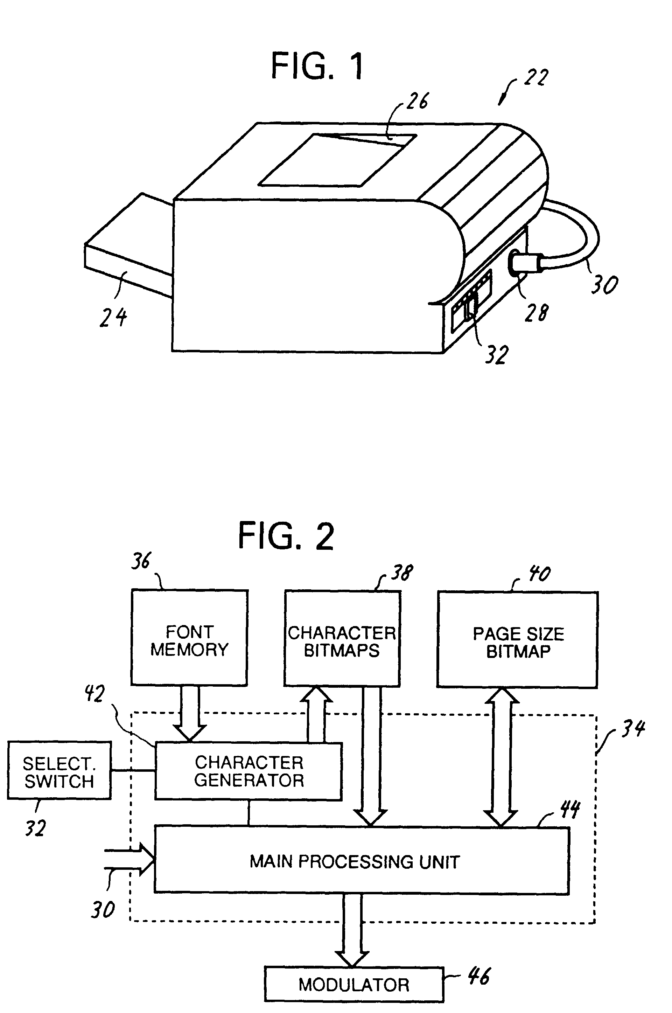

In Fig. 1, a laser printer 22 is shown which comprises a paper supply tablet 24 and a discharge bin 26 for printed copies. On the rear side of the housing of the laser printer 22, there is provided a connector 28 for a cable 30 via which the data to be printed are received from a host computer (not shown). In addition, there is provided a selector switch, for example a slide switch 32, which permits to adjust the fatness of the characters of printed text.

Fig. 2 is a block diagram of the electronic control system of the laser printer 22. This control system generally comprises a data processing block 34, a font memory 36, a character bitmap memory 38 and a page size bitmap memory 40. The data processing block 34 includes a character generator 42 which may be part of a main processing unit 44 but is shown separately in the drawing for the sake of clarity.

Font memory 36 stores a plurality of fonts in a predetermined format in which the shape of each character is specified by a mathematical description of its outline. The character generator 42 reads the font data from the font memory 36 and expands the outline description of each character of a selected font into a character bitmap which is then stored in the character bitmap memory 38.

The main processing unit 44 receives the text data which are transmitted via the cable 30 and, in accordance with these data, it fetches the bitmap representations of the individual characters from the character bitmap memory 38 and stores them at the desired position in a page size bitmap memory 40. When a complete page has been mounted in this way, the main processing unit reads the contents of the page size bitmap from memory 40 and sends them as a pixel bit stream to a modulator 46 for modulating the laser beam of a raster output scanner provided in the laser printer 22.

When the main processing unit receives data for a new printing job, it checks whether the fonts required in this printing job are available already in the character bitmap memory 38. If the required fonts are not yet available at bitmap level, the main processing unit commands the character generator 42 to expand these fonts into bitmaps before the filing of the page size bitmap begins.

The selector switch 32 is connected to the character generator 42 and supplies a signal indicating a fattening distance f by which the fatness of the characters is modified. If f is positive, the bitmap representations are generated in such a manner that each character is fattened by the amount f as compared to the outline stored in the font memory 36. If f is negative, the bitmap representation of the character becomes leaner than the outline in the font memory.

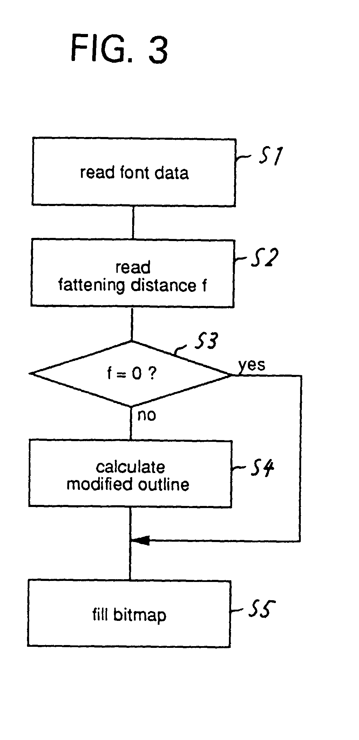

The process performed by the character generator 42 is illustrated in Fig. 3. In step S1, the mathematic description of the outline of each character is read from the font memory 36. In step S2, the character generator 42 reads the fattening distance f which has been set by means of selector switch 32. If it is found in step S3 that the fattening distance f is not equal to zero, then a mathematical description of a modified outline is calculated in step S4. The modified outline is generally obtained by shifting each point of the original outline outwards by the distance f. The necessary calculations depend on the format in which the mathematical description is stored in the font memory. A specific example will be explained below.

When the modified outline has been established in step S4, the character generator 42 proceeds with step S5 in which the character bitmap is filled. In this step, the printing colour (black) is assigned to each pixel in the character bitmap which is located within the contour specified by the modified outline, and the background colour (white) is assigned to all remaining pixels of the character bitmap.

If it is found in step S3 that f equals zero, no modified outline needs to be calculated, and the step S4 is skipped.

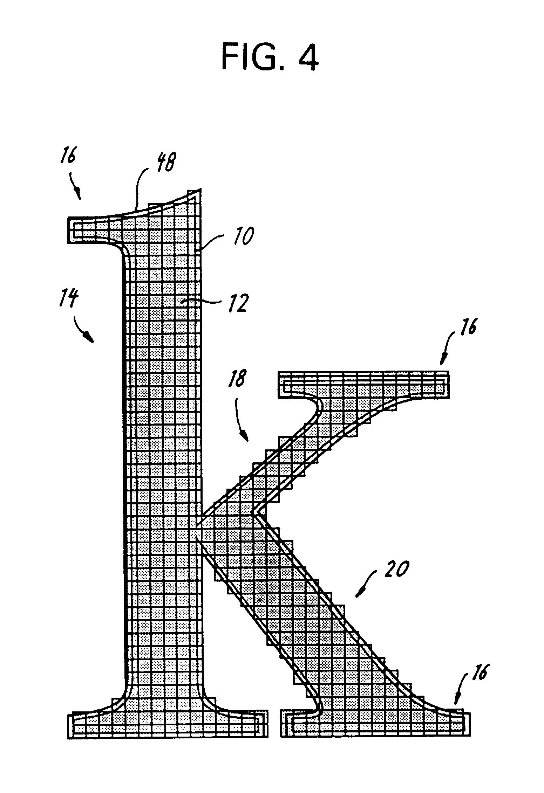

Fig. 4 shows the result of this fattening operation when applied to the character "k" shown in Fig. 13. The original outline 10 has been shifted outwards by the fattening distance f = 0.4 pixel to obtain the modified outline 48. On the basis of an appropriately modified hint, the outline 48 has been positioned in relation to the grid of the bitmap in such a manner that the right border line of the vertical stem 14 is exactly aligned with a column of the grid. Then, in step S5, the modified outline 48 has been filled with black pixels 12, that is to say, each pixel of which the center falls within the outline 48 has been made black.

When comparing the bitmap representations shown in Figs. 4 and 14, it will be observed that, in Fig. 4, a smooth and uniform fattening of the character "k" has been obtained and that the widths of the respective stems 14, 18, 20 are substantially in the same proportion as in Fig. 13.

In case of the vertical stem 14, the difference between the fattening distance of 0.4 pixels used in Fig. 4 and the fattening distance of 0.5 pixels used in Fig. 14 cannot be observed because in the discretization step S5 the stem width is rounded to 6 pixels. However, looking at the borders of the diagonal stems 18 and 20 in Fig. 4, it will be observed that a number of new pixels would have to be added if the fattening distance were increased from 0.4 pixels to 0.5 pixels. Thus, even small variations of the fattening distance f in the order of 0.1 pixels have a noticeable effect.

If a fattening distance f = 0.2 pixels had been chosen in Fig. 4, the width of the vertical stem 14 would have been 5 pixels, as in Fig. 13, but a slight fattening effect would nevertheless have been observable at the diagonal stems 18 and 20.

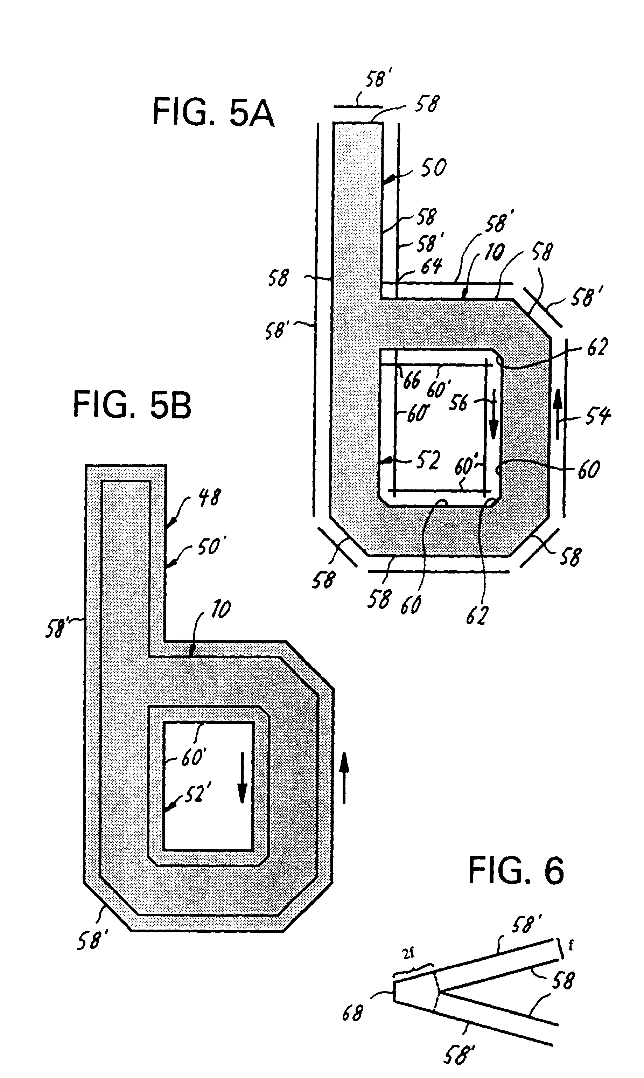

A process of calculating the modified outline 48 in step S4 will now be explained in detail in conjunction with Figs. 5 to 12.

Fig. 5A shows the outline 10 of a character "b". This outline consists of two closed paths 50 and 52 by which the dark area of the character is bounded. Each path 50, 52 and an orientation indicated by arrows 54 and 56, respectively. By convention, the dark area of the character is found on the left side of the path 50 or 52, if viewed in the direction of the associated arrow 54 or 56, respectively.

In the shown example, the path 50 consists only of straight line segments 58, and the path 52 consists only of straight line segments 60 and 62.

The modified outline 48 which is shown in Fig. 5B is obtained from the original outline 10 by executing the following steps.

In a first step, the straight line segments 58, 60 and 62 are shifted by the fattening distance f in a direction normal to the direction of the line segment. If f is positive as in the shown example, the line segments are shifted outwards, i.e. to the right side in relation to the arrow 54 or 56, respectively. In this way, new line segments 58' and 60' are obtained. Although some of the original line segments 60 are separated by the small line segments 62, it will be observed that the new line segments 60' intersect each other, so that the small line segments 62 become redundant. This is why no shifted line segments corresponding to the line segments 62 have been shown. Such redundant line segments may generally occur when the original line segments are very small, i.e. in the order of the fattening distance f.

In a second step, the new line segments 58' are linked in order to form a new closed path 50', and the new line segments 60' are linked to form a new closed part 52', as is shown in Fig. 5B.

In the process of linking the new line segments, two cases may be distinguished. It will be noticed that in Fig. 5A two of the new line segments 58' intersect at an intersection point 64 whereas the other pairs of adjacent line segments 58' do not intersect but form gaps therebetween. In case of the path 52, all of the new line segments 60' intersect at intersection points 66.

A first substep of the linking procedure therefore consists of checking whether the new line segments intersect. This test should be performed not only for all pairs of adjacent line segments 58', but more generally for all pairs of new line segments 58' and 60' for which the distance of two end points is smaller than a certain value (in the order of the fattening distance f). If it is found that the line segments intersect, the intersection point 64 or 66, respectively, is taken as the new common end point of the two line segments, i.e. the end portions which project beyond the intersection points are cut away from the line segments, and any redundant line segments are removed.

If the shifted images 58' of two adjacent line segments 58 do not intersect, then there are two possibilities for linking the new line segments 58'. One possibility is adding a new (straight or curved) line segment interconnecting the end points of the line segments 58'. Another possibility is extending the line segments 58' until they intersect. This solution has been adopted in Fig. 5B.

If this latter approach is used, some special provisions should be made for the case that two line segments 58 meet at a very acute angle, as is shown in Fig. 6. Then, the distance by which the two new line segments 58' had to be extended until they intersect, may become undesirably large. It is therefore preferable to limit the distance by which the line segments 58' are extended to two times the fattening distance f. If the new line segments 58' still do not intersect after they have been extended by 2f, then the new end points of the extended line segments 58' are interconnected by an additional line segment 68, as is shown in Fig. 6. If the extension is limited to 2f, an additional line segment 68 becomes necessary whenever the angle formed between the two line segments 58 is smaller than 60°.

In most commercially available fonts, the outline description includes not only straight line segments but also curved line segments. As a consequence, there should also be provided an appropriate method for handling curved line segments in the fattening process.

A mathematical description of a curved line segment may be given in various ways. However, a description which is suitable for outline fonts should at least provide the following parameters:

- coordinates of the starting point P0 of the line segment,
- coordinates of the end point P3 of the line segment,
- tangent direction at P0,
- tangent direction at P3.

Further, there should be provided at least one additional parameter which defines the shape of the curve in its intermediate portion.

A closed path forming part of a character outline will generally consist of a plurality of straight and curved line segments, and frequently this path will be differentiable even in the starting points and end points of the individual line segments. This means that the tangent direction at the starting point is identical with the tangent direction at the end point of the preceding curved line segment or with the direction of the preceding straight line segment, respectively. In order to make sure that his holds true also for the modified outline, the method used for transforming a curved line segment of the original outline into a corresponding line segment of the modified outline should fulfill the following conditions:

- the starting points and the end points of consecutive line segments should be shifted in the same direction and by the same distance, preferably by the distance f and in the direction normal to the tangent line;
- the transformation should preserve the tangent directions at the starting point and at the end point.

Then, the abovementioned additional parameter or parameters should be varied to approximate the ideal shape of the modified outline with a sufficient accuracy.

As an example, we will now describe a method of transforming a curved line segment which is given by a third order Bezier curve.

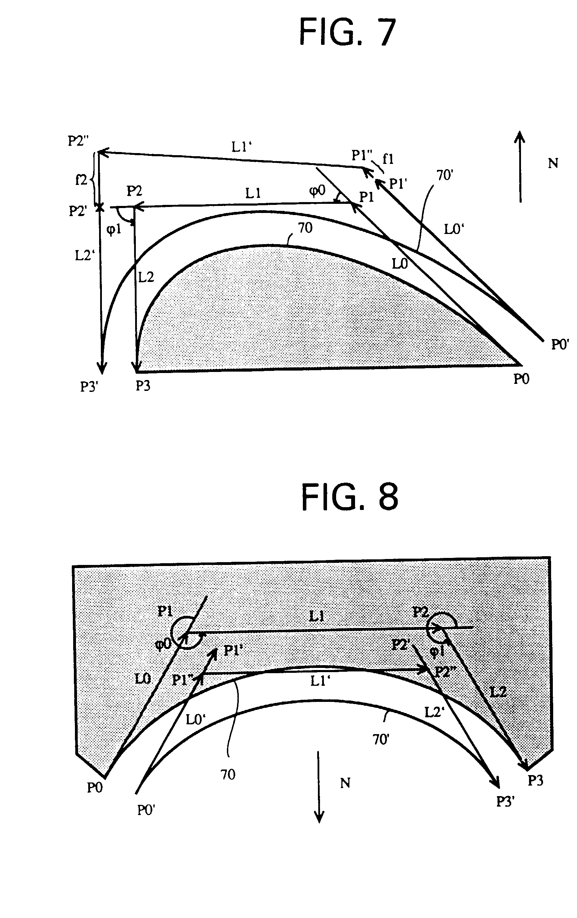

Referring to Fig. 7, a third order Bezier curve 70 can be defined by the coordinates of four control points P0,P1,P2 and P3. The control points P0 and P3 are the starting point and the end point, respectively, of the line segment. The control point P1 defines the direction of the tangent line at P0, and the control point P2 defines the direction of the tangent line at P3. Given the starting point and the end point of the curve and the tangent directions at these points, the description still includes two degrees of freedom which are represented by the positions of the control points P1 and P2 on the straight lines passing through P0 and P1 and through P2 and P3, respectively.

The exact shape of the Bezier curve is given by the vector equation:

$$P(t) = P0\,(1\text{-}t)^3 + 3\,P1\,(1\text{-}t)^2 t + 3\,P2\,(1\text{-}t)t^2 + P3\,t^3 \tag{1}$$

When t is continuously increased from 0 to 1, the point P(t) travels along the Bezier curve 70 from P0 to P3. The orientation of the Bezier curve is given by the direction of increasing t. Thus, the Bezier curve 70 shown in Fig. 7 bounds a convex portion of the filled part of the character. The orientation of the curve is also indicated by the direction of the vectors L0 = P1 - P0, L1 = P2 - P1 and L2 = P3 - P2, which interconnect the control points P0 through P3.

The Bezier curve 70 is transformed into a new Bezier curve 70' as follows.

The control points P0 and P1 are shifted by the fattening distance f in in direction normal to the vector L0. If f is positive, the shifting direction is towards the right side of the vector L0. Thus, new points P0', P1' and a new vector L0' are obtained.

The control points P2, P3 and the vector L2 are shifted in the same manner to obtain new control points P2', P3' and a new vector L2'.

The point P1' is then moved in the direction of the vector L0' by a certain distance f1, so that a new control point P1'' is obtained. The distance f1 is a function of the vectors L0, L1, L2 and the fattening distance f. The sign of f1 is equal to the sign of the scalar product between the vector L0 and a vector N which is normal to a line connecting P0 and P3 and points to the right if viewed from P0 towards P3. In Fig. 7, N points upwards, and since L0 also has an upward component f1 is positive, that is, P1' is moved in the positive direction of L0'.

Similarly, the point P2' is moved in the direction of the vector L2' by a distance f2. The distance f2 is also a function of L0,L1,L2 and f, and the sign of f2 is equal to the sign of the scalar product between L2 and N. In Fig. 7, L2 and N point in opposite directions, and accordingly the point P2'' is obtained by moving the point P2' in the negative direction of the vector L2'.

The absolute value of f1 is obtained as a function of the angle $\varphi0$ between the vectors L0 and L1:

$$|f1| = (4/3).f.(1 - \cos(\varphi0));$$

$$\cos(\varphi0) = L0 * L1/(|L0|.|L1|) \text{ (* means scalar product)} \tag{2}$$

Similarly, the absolute value of f2 is obtained as a function of the angle $\varphi1$ between L1 and L2:

$$|f2| = (4/3).f.(1 - \cos(\varphi1));$$

$$\cos(\varphi 1) = L1 * L2/(|L1|.|L2|) \tag{3}$$

These formulae have been used in the examples shown in Fig. 7 and 8. In Fig. 8, the Bezier curve 70 bounds a concave portion of a character.

The above described method will provide satisfactory results for most practical cases. However, for certain Bezier curves, better results are obtained with the following formulae:

$$|f1| = (4/3).f.(1 - \cos(\varphi 0/2));$$
$$\varphi 0 = \text{arc cos } (L0 * L1/(|L0|.|L1|)) \tag{2'}$$
$$|f2| = (4/3).f.(1 - \cos(\varphi 1/2));$$

$$\varphi 1 = \text{arc cos}(L1 * L2/(|L1|.|L2|)) \tag{3'}$$

In the following TABLE, the formulae giving the best results are indicated in dependance of the values of the angles $\varphi 0$ and $\varphi 1$.

In the TABLE, "I" means that the angle is in the first quadrant ($0° \leq \varphi < 90°$), "II" means that the angle is in the second quadrant ($90° \leq \varphi < 180°$). etcetera. In this connection, the angle $\varphi 0$ between the vectors L0 and L1 is found by counter-clockwise turning L0 until it coincides with L1. The angle $\varphi 1$ is found in an analogous manner. The angles $\varphi 0$ and $\varphi 1$ are indicated in Figs. 7 and 8.

TABLE

| $\varphi 0$ | $\varphi 1$ | preferred formulae |
|---|---|---|
| I | I | (2) and (3) |
| I | II | (2) and (3) |
| I | III | (2) and (3') |
| I | IV | (2) and (3) |
| II | I | (2) and (3) |
| II | II | (2) and (3) |
| II | III | (2') and (3') |
| II | IV | (2') and (3) |
| III | I | (2') and (3) |
| III | II | (2') and (3') |
| III | III | (2') and (3') |
| III | IV | (2) and (3) |
| IV | I | (2) and (3) |
| IV | II | (2) and (3') |
| IV | III | (2) and (3) |
| IV | IV | (2) and (3) |

These formulae provide also satisfactory results in cases where the Bezier curve has an S-like shape. An alternative approach in these cases is to divide the S-shaped Bezier curve into two Bezier curves with uniform curvature. Then, each of these two Bezier curves can be transformed in the manner described in conjunction with Figs. 7 and 8.

If the starting point and/or the end point of a Bezier curve is a non-differentiable point of the path, i.e. if the Bezier curve forms an angle with an adjacent Bezier curve or an adjacent straight line segment, then the segments of the modified outline must be linked with each other. Like in the case discussed in conjunction with Figs. 5A and 5B, the new line segments may intersect each other or may form a gap therebetween.

If a gap is formed, the Bezier curves may be extended by adding a straight line segment which has the same orientation as the tangent line at the corresponding starting point or end point of the Bezier curve. This procedure corresponds to what has been described in conjunction with Figs. 5 and 6.

If, however, the new Bezier curve intersects an adjacent Bezier curve or an adjacent straight line segment, the problem to be solved is to determine the intersection point.

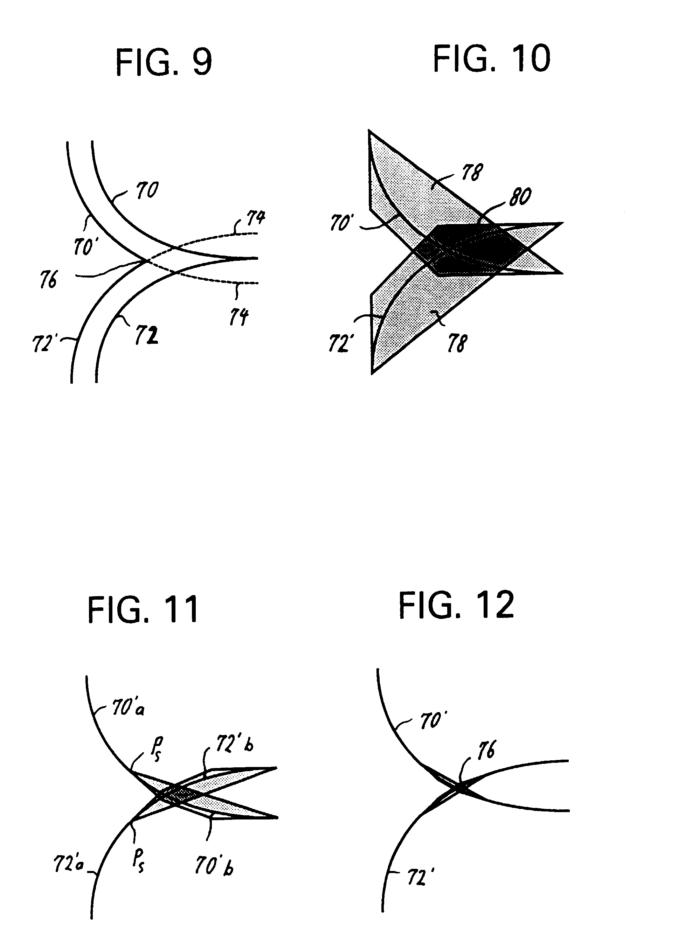

As an example, Fig. 9 illustrates two Bezier curves 70 and 72 which meet at an acute angle. Such a situation is encountered for example in the character "8". When the Bezier curves 70, 72 of the original outline have been transformed into new Bezier curves 70',72', the redundant sections 74 on one side of the intersection point 76 must be removed. To this end, the intersection point 76 between the two Bezier curves 70' and 72' has to be determined.

This intersection point 76 can approximately be determined by means of a recursion which is illustrated in Figs. 10 to 12. In a first step illustrated in Fig. 10 it is checked whether the bounding boxes 78 of the two Bezier curves 70',72' overlap. The bounding boxes are the quadrangles which are defined by the control points of the respective Bezier curves. In the shown example, the bounding boxes 78 overlap in the darkly shaded area 80. The test for determining whether or not there exists an overlap 80 between the two bounding boxes 78 is a straightforward algorithm which need not be explained in detail. When it is found that an overlap 80 exists, each Bezier curve 70,72 is bisected at a point $P_S = P(t=0.5)$. Thus, the Bezier curve 70' is divided into two smaller Bezier curves 70'a and 70'b, and the Bezier curve 72' is divided into new Bezier curves 72'a and 72'b.

The control points of the Bezier curves 70'a, 70'b can be derived from the control points of the curve 70' pursuant to the DeCasteljau method which is described by P.J. Barry and R.N. Goldman in "Computer Aided Design", Vol. 20, No. 3, April 1988, pages 114 to 116. In brief, if a Bezier curve is to be intersected at an intersection point $P(t_S)$, each of the straight line segments connecting the control points P0 and P1, P1 and P2 and P2 and P3, respectively, are divided in accordance with the division ratio $t_S/(1-t_S)$. Then, the two lines which connect the three division points obtained in this way are again divided pursuant to the same division ratio, and the resulting two division points are again divided pursuant to the same division ratio. It can be shown that the single division point obtained in this way lies on the Bezier curve and is equal to the point $P(t_S)$. The division points are the control points of the new segments.

Once the control points for the curves 70'a, etc. have been determined, it is checked whether there exists an overlap between the bounding boxes of the curves 70'a and 72'a or between the curves 70'b and 72'b. Dependent on the result of this test, either the curves 70'a and 72'a or the curves 70'b and 72'b are again bisected in the same manner as described above, so that still smaller sub-curves and bounding boxes are obtained, as is shown in Fig. 12. This procedure is iterated for several times, and as the size of the bounding boxes shrinks, a good approximation of the intersection point 76 is obtained already after a few iteration steps. Normally, no more than 8 steps of iteration are required.

After the intersection point 76 has been determined, it is used as the new starting/end point of the portions of the curves 70' and 72' that are to be retained. The other new control points P1, P2 of these portions are calculated using the DeCasteljau method.

If an intersection point between a Bezier curve and a straight line segment needs to be determined, the procedure is analogous to what has been described above, with the only difference that an overlap between the straight line segment and the bounding box of the single Bezier curve is determined.

The above-described method of determining the intersection point provides not only the coordinates of the intersection point 76 but also the corresponding parameters of the Bezier curves 70' and 72', respectively. Thus, the DeCasteljau method can again be used for dividing the Bezier curves 70' and 72' at the intersection point 76 in order to obtain the control points for the remaining curves 70' and 72' without the redundant sections 74.

The invention has been described above in terms of specific embodiments. It will be understood, however, that the invention is not limited to these embodiments. For example, any known method for determining an intersection point of a Bezier curve with another Bezier curve or straight line may be used instead of the procedure described above.

Further, the formulae (2), (3) and (2'), (3') for calculating the control points of the Bezier curves in the modified outline may be replaced by any other suitable algorithm for approximating the ideal shape of the modified outline.

At present, the approach described in this specification is deemed preferable because it provides satisfactory results without requiring too much calculation time, and, most important, because it can be proved that this procedure is mathematically stable.

In addition to the information on the shape of the characters, commercially available fonts usually include also pieces of information which are called "hints" and which serve for properly adjusting the position of the characters to the grid of the raster output device. Such hints may for example specify certain reference positions for aligning the characters with the lines and columns of the pixel grid. In these cases, it may also be necessary to modify the hint information in accordance with the selected fattening distance.

The invention is not limited to fonts in which curved line segments of the outline are described by third order Bezier curves or by Bezier curves at all.

Whatever description for curved line segments may be used, the transformation for obtaining the modified outline is such that the same kind of description is usable also for the curved line segments in the modified outline.

In the laser printer shown in Fig. 1, the slide switch 32 for inputting the fattening distance f is accessible to the user. In a modified embodiment, input means for setting the fattening distance f may be provided within the housing of the laser printer so that they are accessible only to a maintenance engineer. Further, a command for setting the fattening distance f may be transmitted from the host computer together with the other printing data. In this case, the main processing unit 44 is adapted to decode the command received from the host computer and to supply a corresponding set value for the fattening distance f to the character generator 42. If the system is additionally provided with the selector switch 32, the signal received from this selector switch may be treated as a default setting for the fattening distance.

Finally, it should be noted that the method according to the invention can be implemented not only in a printer or more generally, in a raster output device, but can also be implemented in an apparatus which is specifically designed for generating character bitmaps which are then loaded directly into the character bitmap memory 38 of the printer, so that the printer need not be equipped with a font memory 36.

## Claims

1. A method of modifying the fatness of characters to be output on a raster output device (22), said method comprising

   - saving font data which define the shape of each character as an outline (10) consisting of line segments (58,60,70), including curved line segments (70) defined by a set of parameters including among others a starting point P0 and an end point P3 of the line segment and the tangent directions of the line segments at P0 and P3,
   - defining a fattening distance f by which the fatness of the character after the modifying is to differ from that of the original font character
   - calculating a modified outline (48) on the basis of said font data and said fattening distance f, by

        a) shifting at least the points P0 and P3 by said fattening distance f in a direction normal to the respective tangent directions at said points, thereby obtaining thestarting point P0' and the end point P3' of a curved segment (70') of the modified outline, and

   - obtaining a bitmap representation of the character by filling the modified outline (48) with discrete pixels (12),

   characterized by
   said step of calculating further comprising

        b) setting the tangent direction of the modified line segment (70') at P0' to be parallel with the tangent direction of the original line segment (70) at P0 and the tangent direction of the modified line segment (70') at P3' to be parallel with the tangent direction of the original line segment (70) at P3, and
        c) varying at least one other parameter determining the shape of the modified line segment (70'), using the tangent direction of the modified line segment (70') at P0' and P3', such that the distance between the original line segment (70) and the modified line segment (70') becomes approximately equal to f over the whole length of the line segments.

2. A method as defined in claim 1, wherein said curved line segments (70) are third order Bezier curves defined by control points P0,P1,P2 and P3, and wherein said other parameters which are varied in step c) are the positions of the control points P1 and P2 on the tangent lines at P0 and P3, respectively.

3. A method as defined in claim 1, wherein, for a straight line segment (58,60,62), said modified outline (48) is determined by shifting the said straight line segment by said distance f in in direction normal to the line segment.

4. A method as defined in claim 1, 2 or 3, further comprising connecting the adjacent end points of the new line segments (58',60') by inserting additional line segments or by extending the line segments until they intersect, or if the modified line segments intersect already, by cutting the end portions at the intersection point (66;76).

5. A method as defined in any of the preceding claims, wherein the fattening distance f is automatically selected as a function of the selected font size.

6. A method as defined in any of the preceding claims, in which the fattening distance f is determined dependent on the font size and the pixel size of the raster output device, such that the width of the horizontal and/or vertical stems of the characters as defined by the modified outline (48) is equal to an integral number of pixels.

**7.** A printer, comprising:

a font memory (36) for storing font data which define the shape of each character as an outline consisting of straight and curved line segments,
a bitmap memory (38) for storing bitmap representations of the individual characters,
a character generator (42) for transforming said font data into said bitmap representations,
a raster output device (46) and
a controller (44) adapted to receive encoded text data and to supply the bitmap data stored in said bitmap memory (38) to said raster output device (46) in accordance with the received text data,

characterized in that said character generator (42) is adapted to transform the font data into bitmap representations in accordance with a method as defined in any of the preceding claims.

**8.** A printer as defined in claim 7, comprising input means (32) for inputting the fattening distance f.

**9.** A printer as defined in claim 8, wherein said input means comprise a user operable switch (32).

**Patentansprüche**

**1.** Verfahren zum Ändern des Fettdruckes von Zeichen für die Ausgabe auf einem Raster-Ausgabegerät (22), welches Verfahren umfaßt:

- Speichern von Zeichensatz-Daten, die die Form jedes Zeichens als einen Umriß (10) definieren, der aus Liniensegmenten (58, 60, 70) einschließlich gekrümmter Liniensegmente (70) besteht, die durch einen Satz von Parametern definiert sind, der u.a. einen Anfangspunkt P0 und einen Endpunkt P3 des Liniensegments und die Tangentenrichtungen der Liniensegmente bei P0 und P3 enthält,

- Definieren einer Anfettungsbreite f, um die sich die Fettheit des Zeichens nach der Änderung von der des ursprünglichen Zeichensatz-Zeichens unterscheiden soll,

- Berechnen eines modifizierten Umrisses (48) anhand der Zeichensatz-Daten und der Anfettungsbreite f, durch

(a) Verschieben wenigstens der Punkte P0 und P3 um die Anfettungsbreite f in einer Richtung senkrecht zu den jeweiligen Tangentenrichtungen an diesen Punkten, um so den Anfangspunkt P0' und den Endpunkt P3' eines gekrümmten Segments (70') des modifizierten Umrisses zu erhalten, und

- Erzeugen einer Bitmap-Darstellung des Zeichens durch Ausfüllen des modifizierten Umrisses (48) mit diskreten Pixeln (12),

dadurch **gekennzeichnet**, daß
der genannte Berechnungsschritt weiterhin umfaßt:

(b) Einstellen der Tangentenrichtung des modifizierten Liniensegments (70') bei P0' parallel zu der Tangentenrichtung des ursprünglichen Liniensegments (70) bei P0 und der Tangentenrichtung des modifizierten Liniensegments (70') bei P3' parallel zu der Tangentenrichtung des ursprünglichen Liniensegments (70) bei P3, und
c) Variieren wenigstens eines anderen Parameters, der die Form des modifizierten Liniensegments (70') bestimmt, unter Verwendung der Tangentenrichtung des modifizierten Liniensegments (70') bei P0' und P3', derart, daß der Abstand zwischen dem ursprünglichen Liniensegment (70) und dem modifizierten Liniensegment (70') auf der gesamten Länge der Liniensegmente annähernd gleich f wird.

**2.** Verfahren nach Anspruch 1, bei dem die gekrümmten Liniensegmente (70) Bezier-Kurven dritter Ordnung sind, die durch Führungspunkte P0, P1, P2 und P3 definiert sind, und bei dem die genannten anderen Parameter, in Schritt c) variiert werden, die Positionen der Führungspunkte P1 und P2 auf den Tangenten an P0 bzw. P3 sind.

**3.** Verfahren nach Anspruch 1, bei dem der modifizierte Umriß (48) für ein gerades Liniensegment (58, 60, 62) dadurch bestimmt wird, daß das gerade Liniensegment um die Entfernung f in einer Richtung senkrecht zu dem Liniensegment verschoben wird.

4. Verfahren nach Anspruch 1, 2 oder 3, das weiterhin die Verbindung benachbarter Endpunkte der neuen Liniensegmente (58', 60') durch Einfügen zusätzlicher Liniensegmente oder durch Verlängern der Liniensegmente, bis sie sich schneiden, oder, wenn die modifizierten Liniensegmente sich bereits schneiden, das Abschneiden der Endabschnitte am Schnittpunkt (66; 76) umfaßt.

5. Verfahren nach einem der vorstehenden Ansprüche, bei dem die Anfettungsbreite f automatisch als eine Funktion der gewählten Schriftgröße gewählt wird.

6. Verfahren nach einem der vorstehenden Ansprüche, bei dem die Anfettungsbreite f derart in Abhängigkeit von der Schriftgröße und der Pixel-Größe des Raster-Ausgabegerätes bestimmt wird, daß die Breite der horizontalen und/oder vertikalen Stege des Zeichens, wie es durch den modifizierten Umriß (48) definiert wird, gleich einer ganzzahligen Anzahl von Pixeln ist.

7. Drucker, mit:

   einem Zeichensatz-Speicher (36) zum Speichern von Zeichensatz-Daten, die die Form jedes Zeichens als einen Umriß definieren, der aus geraden und gekrümmten Liniensegmenten besteht,

   einen Bitmap-Speicher (38) zum Speichern von Bitmap-Darstellungen der einzelnen Zeichen,

   einem Raster-Ausgabegerät (46) und

   einer Steuereinrichtung (44), die dazu ausgebildet ist, kodierte Textdaten zu empfangen und die im Bitmap-Speicher (38) gespeicherten Bitmap-Daten in Übereinstimmung mit den empfangenen Textdaten an das Raster-Ausgabegerät (46) zu liefern,

   dadurch **gekennzeichnet**, daß der Zeichengenerator (42) dazu eingerichtet ist, die Zeichensatz-Daten gemäß einem Verfahren nach einem der vorstehenden Ansprüche in Bitmap-Darstellungen zu transformieren.

8. Drucker nach Anspruch 7, mit Eingabemitteln (32) zur Eingabe der Anfettungsbreite f.

9. Drucker nach Anspruch 8, bei dem die Eingabemittel einen benutzerbetätigbaren Schalter (32) aufweisen.

**Revendications**

1. Procédé pour modifier l'épaisseur de caractères à introduire sur un dispositif de sortie à balayage (22), ledit procédé comprenant :

   - le stockage des données de police qui définissent la forme de chaque caractère sous forme d'un contour (10) se composant de segments de ligne (58, 60, 70), comprenant des segments de ligne courbe (70) définis par un ensemble de paramètres incluant parmi d'autres un point de départ P0 et un point d'arrivée P3 du segment de ligne et les directions tangentes des segments de ligne en P0 et en P3,
   - la définition d'une distance d'épaississement f de laquelle l'épaisseur du caractère après modification doit différer de celle du caractère de police initial,
   - le calcul d'un contour modifié (48) à partir desdites données de police et de ladite distance d'épaississement f, en

      a) déplaçant au moins les points P0 et P3 de ladite distance d'épaississement f dans une direction normale aux directions tangentes respectives en lesdits points, ce qui fait que l'on obtient le point de départ P0' et le point d'arrivée P3' d'un segment courbe (70') du contour modifié, et

   - l'obtention d'une représentation pixelisée du caractère en remplissant le contour modifié (48) avec des pixels discrets (12) caractérisé en ce que ladite étape de calcul comprend en outre :

      b) la détermination de la direction tangente du segment de ligne modifié (70') en P0' pour qu'elle soit parallèle à la direction tangente du segment de ligne initial (70) en P0 et la détermination de la direction tangente du segment de ligne modifié (70') en P3' pour qu'elle soit parallèle à la direction tangente du segment de ligne initial (70) en P3, et

c) la modification d'au moins un autre paramètre déterminant la forme du segment de ligne modifié (70'), en utilisant la direction tangente du segment de ligne modifié (70') en P0' et P3', de telle sorte que la distance entre le segment de ligne initial (70) et le segment de ligne modifié devienne a peu près égale à f sur toute la longueur des segments de ligne.

2. Procédé selon la revendication 1, caractérisé en ce que lesdits segments de ligne courbe (70) sont des courbes de Bézier du troisième ordre définies par des points de référence P0, P1, P2 et P3, et en ce que lesdits autres paramètres qui sont modifiés au cours de l'étape c) sont les positions des points de référence P1 et P2 sur les lignes tangentes en P0 et P3, respectivement.

3. Procédé selon la revendication 1, caractérisé en ce que, pour un segment de ligne droite (58, 60, 62), ledit contour modifié (48) est déterminé en déplaçant ledit segment de ligne droite de ladite distance f dans une direction normale au segment de ligne.

4. Procédé selon l'une quelconque des revendications 1, 2 ou 3, comprenant en outre la liaison des points d'arrivée adjacents des nouveaux segments de ligne (58', 60'), en insérant des segments de ligne supplémentaires ou en prolongeant les segments de ligne jusqu'à ce qu'ils se coupent, ou si les segments de ligne modifiés se coupent déjà, en tronquant les parties d'extrémité au niveau du point d'intersection (66, 67).

5. Procédé selon l'une quelconque des revendications précédentes, caractérisé en ce que la distance d'épaississement f est automatiquement sélectionnée en fonction de la taille de la police sélectionnée.

6. Procédé selon l'une quelconque des revendications précédentes, caractérisé en ce que la distance d'épaississement f est déterminée en fonction de la taille de police et de la taille des pixels du dispositif de sortie à balayage, de telle manière que la largeur des jambages horizontaux et/ou verticaux des caractères telle que définie par le contour modifié (48) est égale à un nombre entier de pixels.

7. Imprimante comprenant :

une mémoire de polices (36) permettant de stocker des données de police qui définissent la forme de chaque caractère comme un contour se composant de segments de ligne droite et courbe,
une mémoire de représentations pixelisées (38) permettant de stocker les représentations pixelisées des caractères individuels,
un générateur de caractères (42) permettant de transformer lesdites données de police en lesdites représentations pixelisées,
un dispositif de sortie à balayage (46) et
un circuit de commande (44) fait pour recevoir les données de texte codées et pour appliquer les données pixelisées stockées dans ladite mémoire de représentations pixélisées (38) au dispositif de sortie à balayage (46) conformément aux données de texte reçues,

caractérisée en ce que ledit générateur de caractères (42) est adapté pour transformer les données de police en représentations pixelisées conformément à un procédé tel que défini dans l'une quelconque des revendications précédentes.

8. Imprimante selon la revendication 7, comprenant des moyens d'entrée (32) permettant d'introduire la distance d'épaississement f.

9. Imprimante selon la revendication 8, caractérisée en ce que lesdits moyens d'entrée comprennent un commutateur pouvant être actionné par l'utilisateur (32).

# FIG. 1

# FIG. 2

# FIG. 3

```
┌─────────────────────┐
│    read font data   │ ─ S1
└─────────────────────┘
          │
┌─────────────────────┐
│       read          │ ─ S2
│ fattening distance f │
└─────────────────────┘
          │
         ╱╲          S3
        ╱  ╲
       ╱    ╲      yes
      ╱ f = 0 ?╲ ────────┐
      ╲        ╱         │
       ╲      ╱          │
        ╲    ╱           │
         ╲  ╱            │
          no             │
          │              │
┌─────────────────────┐  │
│     calculate       │ ─ S4
│  modified outline   │  │
└─────────────────────┘  │
          │◄─────────────┘
          │
┌─────────────────────┐
│     fill bitmap     │ ─ S5
└─────────────────────┘
```

# FIG. 4

FIG. 5A

FIG. 5B

FIG. 6

# FIG. 7

# FIG. 8

# FIG. 9

# FIG. 10

# FIG. 11

# FIG. 12

# FIG. 13

# FIG. 14